# DEMANDE DE BREVET EUROPEEN

(11) **EP 1 808 742 A1**
(43) Date de publication de la demande: **18.07.2007**
(21) Numéro de dépôt: 05112905.4
(22) Date de dépôt: 23.12.2005
(51) Int. Cl.: G06F 1/24

(54) **Procédé pour assurer une remise en fonction d'un circuit à microcontrôleur après un mode de repos, et circuit à microcontrôleur pour sa mise en oeuvre**

(71) Demandeur: EM Microelectronic-Marin SA, 2074 Marin (CH)
(72) Inventeur: Jaeggi, Hugo, 2046, Fontaines (CH)
(74) Mandataire: Robert, Vincent

(57) **Abrégé**

Le procédé de contrôle permet une remise en fonction d'un circuit à microcontrôleur après un mode de repos. Le circuit comprend un microcontrôleur et des moyens de supervision du niveau de la tension d'alimentation du circuit à microcontrôleur. Le microcontrôleur est constitué notamment d'un microprocesseur, d'une unité de mise à zéro et d'un oscillateur pour fournir des signaux d'horloge (CLK) pour cadencer des opérations traitées notamment dans le microprocesseur. Au terme du mode de repos, une instruction (RSleep) est fournie dans le circuit à microcontrôleur pour le passage du mode de repos à un mode de fonctionnement normal. Ladite instruction commande un registre à verrouillage des moyens de supervision, qui fournit un signal (IN) pour enclencher directement et de manière automatique les moyens de supervision. Dés la mise en fonction des moyens de supervision, une commande (Reset) est fournie à l'unité de mise à zéro pour maintenir plusieurs parties du microcontrôleur dans un état de repos. Une comparaison du niveau de la tension d'alimentation par rapport à un seuil de référence de la tension d'alimentation est effectuée dans les moyens de supervision. Une remise en fonction du microcontrôleur n'intervient qu'après que le niveau de tension d'alimentation est contrôlé supérieur au seuil de tension d'alimentation.

## Description

L'invention concerne un procédé pour assurer ou contrôler une remise en fonction d'un circuit à microcontrôleur après un mode de repos. Le circuit comprend notamment un microcontrôleur et des moyens de supervision du niveau de la tension d'alimentation du circuit à microcontrôleur.

L'invention concerne également un circuit à microcontrôleur pour la mise en oeuvre du procédé. Le circuit est susceptible de fonctionner à la plus faible tension d'alimentation admise.

Pour garantir qu'un circuit à microcontrôleur soit toujours actif lorsqu'il est alimenté électriquement dans une marge de tension d'alimentation bien définie, il peut être prévu des moyens de supervision du niveau de la tension d'alimentation. Ces moyens de supervision gèrent constamment l'alimentation en puissance du circuit à microcontrôleur. Ceci permet de placer le microcontrôleur ou un autre élément du circuit dans un mode de remise à zéro dès que le niveau de la tension d'alimentation est en dehors de la marge définie. Pour ce faire, les moyens de supervision peuvent comprendre des comparateurs pour comparer le niveau de la tension d'alimentation par rapport à un niveau seuil déterminé. Cependant, les moyens de supervision sont des éléments actifs, qui absorbent un courant de consommation important. Pour cette raison, ils doivent si possible être déclenchés durant le mode de repos.

Dans des réalisations de circuit à microcontrôleur de l'état de la technique, le microcontrôleur est tout d'abord enclenché, lors du passage d'un mode de repos à un mode de fonctionnement normal, avant de permettre aux moyens de supervision de contrôler le niveau de la tension d'alimentation. Au cas où la tension d'alimentation est en dehors de la marge de tension spécifiée, le circuit n'est pas en mesure d'enclencher correctement les moyens de supervision. De ce fait, le circuit à microcontrôleur passera du mode de repos à un mode de fonctionnement non protégé, ce qui peut le conduire à effectuer des actions ou opérations non désirées. Le microcontrôleur non protégé peut donc exécuter de fausses instructions ce qui est un inconvénient.

Dans d'autres réalisations largement répandues de circuits à microcontrôleur, la fonction de supervision est toujours active indépendamment du mode dans lequel se trouve ledit circuit à microcontrôleur. Grâce à cela, le circuit à microcontrôleur est totalement protégé. Cependant, une forte consommation de puissance est constatée dans le mode de repos, ce qui est un principal inconvénient dans le cas où le circuit à microcontrôleur équipe un appareil électrique, qui est alimenté par une batterie. De ce fait, la batterie doit être changée fréquemment, ce qui rend l'appareil comprenant ledit circuit à microcontrôleur coûteux.

L'invention a donc pour but principal de fournir un procédé pour assurer ou contrôler une remise en fonction de composants d'un circuit à microcontrôleur après un mode de repos afin de pallier les inconvénients cités ci-dessus.

A cet effet, l'invention concerne un procédé de contrôle d'une remise en fonction d'un circuit à microcontrôleur, qui comprend les caractéristiques mentionnées dans la revendication 1.

Des étapes particulières avantageuses du procédé sont définies dans les revendications dépendantes 2 à 6.

Un avantage du procédé de contrôle de la remise en fonction d'un circuit à microcontrôleur est que les moyens de supervision sont automatiquement mis en fonction dès la réception d'une instruction de remise en fonction du circuit après un mode de repos. Dès la réception de ladite instruction, une mise à zéro de certaines parties du microcontrôleur, notamment du microprocesseur, est réalisée pendant que les moyens de supervision contrôlent le niveau de la tension d'alimentation. Une fois que la tension d'alimentation est contrôlée à un niveau suffisant de fonctionnement, tout le circuit à microcontrôleur passe dans un mode de fonctionnement normal. De cette manière, cela évite au microcontrôleur de produire des erreurs lors de certaines opérations si le niveau de tension d'alimentation n'est pas à un niveau suffisant. Le circuit à microcontrôleur est donc protégé grâce aux moyens de supervision.

Avantageusement, les moyens de supervision sont déclenchés dans le mode de repos et éventuellement après avoir effectué le contrôle du niveau de la tension d'alimentation dans un mode de réveil pour le passage du mode de repos au mode de fonctionnement normal. De cette façon, la consommation électrique du circuit à microcontrôleur est fortement réduite. Cette consommation électrique est réduite principalement dans le mode de repos où un oscillateur du microcontrôleur, qui fournit des signaux d'horloge pour cadencer diverses opérations, est déconnecté. Comme selon les applications la durée d'un mode de repos peut être de l'ordre de 100 fois supérieure à la durée d'un mode de fonctionnement normal du circuit, une décharge importante d'une pile d'alimentation électrique dudit circuit peut être évitée.

A cet effet, l'invention concerne également un circuit à microcontrôleur pour la mise en oeuvre du procédé cité ci-devant, qui comprend les caractéristiques définies dans la revendication 7.

Une forme d'exécution spécifique du circuit à microcontrôleur est définie dans la revendication dépendante 8.

A cet effet, l'invention concerne également un appareil électrique muni du circuit à microcontrôleur, qui comprend les caractéristiques définies dans la revendication 9.

Des formes d'exécution de l'appareil sont définies dans la revendication dépendante 10.

Les buts, avantages et caractéristiques du procédé de contrôle de la remise en fonction d'un circuit à microcontrôleur après un mode de repos, ainsi que ledit circuit pour sa mise en oeuvre apparaîtront mieux dans la description suivante en regard des dessins sur lesquels :
- la figure 1 représente de manière simplifiée des composants électroniques du circuit à microcontrôleur pour la mise en oeuvre du procédé selon l'invention,
- la figure 2 représente une forme d'exécution des moyens de supervision du circuit à microcontrôleur pour la mise en oeuvre du procédé selon l'invention, et
- la figure 3 représente un diagramme temporel illustrant la séquence de différents signaux pour le passage notamment du mode de repos au mode de fonctionnement normal du circuit à microcontrôleur pour la mise en oeuvre du procédé selon l'invention.

Dans la description suivante comme différents composants électroniques du circuit à microcontrôleur sont bien connus, ils ne seront pas explicités en détail.

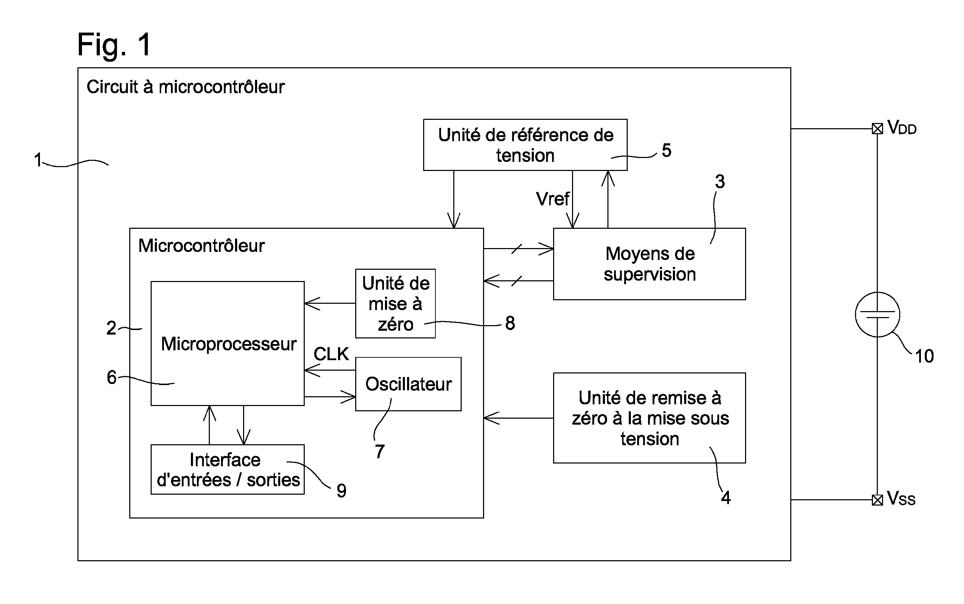

La figure 1 montre un schéma simplifié des différents composants du circuit à microcontrôleur 1. Le circuit comprend principalement un microcontrôleur 2, des moyens de supervision du niveau de la tension d'alimentation 3, une unité de remise à zéro à la mise sous tension 4, et une unité de tension de référence 5. Le circuit à microcontrôleur peut être connecté par ses bornes d'alimentation V_{DD} et V_{SS} à une source de tension continue 10 pour son alimentation électrique. La source de tension peut être une ou plusieurs piles susceptibles de fournir une tension comprise entre au moins 0.9 V à 5.5 V par exemple. De cette manière, le circuit à microcontrôleur 1 peut fonctionner normalement dans un mode actif, c'est-à-dire dans un mode de fonctionnement normal.

Le microcontrôleur 2 comprend principalement un oscillateur 7 par exemple du type RC, qui produit dans un mode actif des signaux d'horloge CLK pour cadencer des opérations traitées dans un microprocesseur 6. La fréquence des signaux d'horloge peut être choisie entre 32 et 800 kHz, par exemple à 250 kHz. Le microcontrôleur comprend également une unité de mise à zéro 8 pour suspendre le fonctionnement notamment du microprocesseur 6 lorsque le niveau de la tension d'alimentation est en dehors d'une marge de tension définie. Le fonctionnement du microprocesseur est suspendu par une mise à zéro (Reset) par exemple dans le cas de surtensions, de sous-tensions, de décharges électrostatiques ESD ou d'un niveau de tension de la pile insuffisant.

Le microcontrôleur 2 comprend encore une interface d'entrées/sorties 9 de signaux de commande, par exemple pour la commande d'un dispositif d'affichage et/ou d'un dispositif motorisé à circuit électronique d'entraînement du moteur d'un appareil électrique dans lequel le circuit à microcontrôleur est monté. L'appareil peut être un rasoir électrique, ou une brosse à dent électrique, ou un téléphone portable ou divers autres instruments alimentés principalement par une ou plusieurs piles.

Comme ces types d'appareils alimentés par une ou plusieurs piles sont en grande partie du temps dans un mode de repos, par exemple 99% du temps, la consommation électrique doit être fortement réduite dans ce mode. Ainsi dans le mode de repos, le fonctionnement des moyens de supervision 3, de l'unité de référence de tension 5, de l'oscillateur 7, de l'interface d'entrées/sorties 9 et d'une grande partie du microprocesseur 6 doit être suspendu. Pour un tel circuit à microcontrôleur, la consommation électrique dans le mode de repos peut être de l'ordre de 100 nA, alors que dans un mode de fonctionnement normal la consommation peut être de l'ordre de 25 pA.

Dans la présente invention, le microcontrôleur 2 peut être basé sur un microcontrôleur EM6680 produit et fourni par l'entreprise EM Microelectronic-Marin SA en Suisse. Dans ce microcontrôleur EM6680, l'unité de remise à zéro à la mise sous tension 4 est intégrée dans la structure du microcontrôleur. Il peut être envisagé également à l'avenir d'intégrer aussi bien les moyens de supervision 3 et l'unité de référence de tension 5 en combinaison d'un régulateur de tension dans la structure du microcontrôleur 2.

Selon une caractéristique principale de l'invention, les moyens de supervision 3 sont prévus pour être automatiquement enclenchés en premier au terme d'un mode de repos par une instruction de remise en fonction RSleep du circuit à microcontrôleur. Cette instruction de remise en fonction peut être ordonnée par une action manuelle d'un utilisateur sur un bouton d'un appareil comprenant le circuit à microcontrôleur, ou être automatiquement produite par une programmation d'un temporisateur du microcontrôleur.

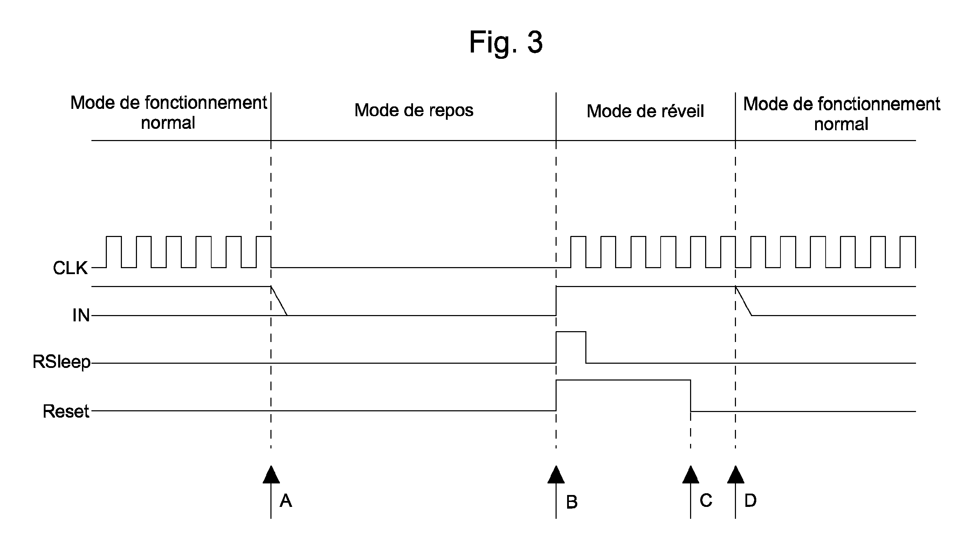

Une remise en fonction de l'oscillateur 7 et l'unité de référence de tension 5, qui fournit une tension de référence Vref aux moyens de supervision 3 comme expliqué ci-après, est également effectuée dès réception de l'instruction. Par contre, le fonctionnement du microprocesseur 6 est directement suspendu par l'unité de mise à zéro 8 sous la commande d'un signal Reset produit par les moyens de supervision 3. Dès la mise en fonction des moyens de supervision 3, un mode de réveil débute pour le contrôle du niveau de la tension d'alimentation. Une fois que le niveau de la tension d'alimentation contrôlé par les moyens de supervision est suffisant le circuit à microcontrôleur passe dans un mode de fonctionnement normal comme expliqué ci-après en référence à la figure 3.

Les moyens de supervision 3 ont donc pour tâche de contrôler le niveau de la tension d'alimentation avant de permettre au microprocesseur 6 de pouvoir exécuter diverses opérations en fonctionnement normal. Tant que le niveau de la tension d'alimentation est en dehors d'une marge de tension spécifiée, notamment en dessous d'une valeur minimale de tension, le microprocesseur est toujours suspendu de fonctionnement afin de le protéger et éviter qu'il produise des erreurs lors de l'exécution de diverses opérations.

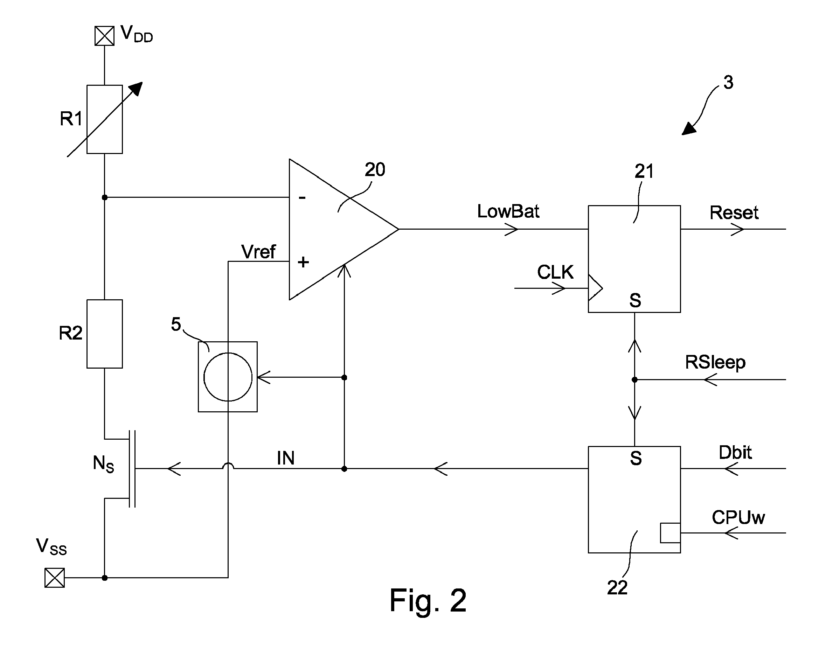

La figure 2 montre une forme d'exécution des moyens de supervision 3 pour le contrôle du niveau de tension d'alimentation au passage du mode de repos au mode de fonctionnement normal du circuit à microcontrôleur. Les moyens de supervision 3 reçoivent une instruction RSleep, qui va imposer ou forcer un enclenchement des moyens de supervision, ainsi que de l'oscillateur du microcontrôleur et de l'unité de référence de tension pour la fourniture d'une tension de référence Vref. Cette instruction RSleep est fournie sous la forme d'une impulsion de tension, dont la valeur de tension à l'état haut défini "1" peut être proche de la tension d'alimentation V_{DD} ou d'une tension régulée inférieure.

L'instruction RSleep est fournie à une borne Set d'une bascule 21, qui est cadencée en même temps ou après l'instruction par un signal d'horloge CLK fourni par l'oscillateur du microcontrôleur, qui est remis en fonction. Cette instruction RSleep permet de produire un signal de commande Reset à l'état "1" en sortie, qui est transmis à l'unité de mise à zéro du microcontrôleur afin de suspendre le fonctionnement du microprocesseur. L'instruction RSleep à l'état "1" est également fournie à une borne Set d'un registre à verrouillage 22 (Latch), qui impose un signal de sortie IN à l'état "1" pour enclencher la fonction de supervision ou surveillance avant d'entrer dans le mode de fonctionnement normal.

Les moyens de supervision 3 comprennent également un diviseur résistif constitué par deux résistances R1 et R2 connectées en série avec un transistor de type nMOS N_{S} entre les deux bornes V_{DD} et V_{SS} de la source de tension continue. La borne de source du transistor N_{S} est reliée à la borne V_{SS} de la source de tension, alors que la borne de drain est reliée à la résistance R2. La borne de grille du transistor N_{S} reçoit le signal d'enclenchement IN, qui est à l'état "1" au passage du mode de repos au mode de réveil. De ce fait, le transistor N_{S} devient conducteur afin qu'un courant traverse le diviseur résistif.

Le noeud de connexion des deux résistances R1 et R2 est relié à une borne négative d'un comparateur 20, alors que la borne positive du comparateur reçoit une tension de référence Vref fournie par l'unité de référence de tension 5. Le signal d'enclenchement IN à l'état "1" permet l'enclenchement de l'unité de référence de tension 5 et du comparateur 20. La valeur de la tension de référence Vref peut être déterminée par un seuil de tension d'un transistor ou par un circuit du type bandgap de l'unité de référence de tension. De préférence, cette valeur de la tension de référence Vref peut être fixée à 0.35 V représentative d'un seuil de référence de la tension d'alimentation.

Dans le cas où le niveau de tension d'alimentation minimum du circuit à microcontrôleur est proche de 0.9 V, le comparateur 20 doit être en mesure de détecter quand le niveau de la tension d'alimentation descend en dessous d'un seuil de référence fixé par exemple à 1.15 V par sécurité. Pour ce faire, la valeur de la première résistance R1 peut être ajustée par rapport à la valeur de la seconde résistance R2 pour déterminer une tension proche de Vref au noeud de connexion des deux résistances quand le niveau de la tension d'alimentation est proche de 1.15 V. Le comparateur 20 fournit un signal de commande LowBat, qui est à l'état "1" si la tension d'alimentation est en dessous du seuil de référence, et qui est à l'état "0" proche de V_{SS} si la tension d'alimentation est suffisante, c'est-à-dire au-dessus du seuil de référence. Avec le signal de commande LowBat à l'état "1" fourni à la bascule 21, un signal Reset à l'état "1" en sortie de la bascule 21 commande l'unité de remise à zéro du microcontrôleur pour suspendre le fonctionnement du microprocesseur.

Une fois que le niveau de la tension d'alimentation contrôlé dans les moyens de supervision 3 est suffisant dans le mode de réveil, le circuit à microcontrôleur entre dans un mode de fonctionnement normal où le microprocesseur peut exécuter normalement toutes ses opérations. Par mesure d'économie de courant, les moyens de supervision, ainsi que l'unité de référence de tension peuvent être déconnectés. Pour ce faire, le microprocesseur fournit une instruction d'écriture CPUw à l'état "1", ainsi qu'une donnée Dbit à l'état "0" au registre à verrouillage 22 pour imposer un signal de sortie IN à l'état "0". De cette manière, le transistor N_{S} devient non conducteur, et le comparateur 20 et l'unité de référence de tension 5 sont déconnectés.

La figure 3 représente un diagramme temporel illustrant la séquence de différents signaux décrits ci-dessus pour le passage notamment du mode de repos au mode de fonctionnement normal du circuit à microcontrôleur.

Dans le mode de fonctionnement normal du circuit à microcontrôleur jusqu'à l'instant désigné A, les moyens de supervision peuvent être soit déconnectés par mesure d'économie de courant, soit en fonction par le signal d'enclenchement IN à l'état "1" comme montré. Les moyens de supervision en fonction surveillent le niveau de la tension d'alimentation, qui peut éventuellement fluctuer en fonction d'une charge excessive connectée au circuit à microcontrôleur et de la température. L'oscillateur est en fonction pour fournir des signaux d'horloge CLK notamment pour cadencer des opérations traitées dans le microprocesseur en fonction. L'instruction de remise en fonction RSleep, ainsi que le signal Reset sont à l'état "0".

Après ce mode de fonctionnement normal dès l'instant A, le logiciel du microprocesseur commande le registre à verrouillage des moyens de supervision pour le passage dans un mode de repos où le signal de sortie IN passe à l'état "0". L'oscillateur du microcontrôleur est également déconnecté, ce qui permet de réduire fortement la consommation électrique à une valeur de plus de 2000 fois inférieure à la valeur de consommation en mode de fonctionnement normal. Le passage du mode de fonctionnement normal au mode de repos peut être programmé après une période d'inactivité de l'appareil, qui comprend le circuit à microcontrôleur. Après une période d'inactivité de par exemple 8 minutes, le circuit à microcontrôleur entre dans le mode de repos.

La fin du mode de repos à l'instant B est signalée par un événement, tel qu'une instruction de remise en fonction RSleep, qui est fournie aux moyens de supervision. Ceci permet également de remettre en fonction l'oscillateur du microcontrôleur, ainsi que l'unité de référence de tension. Par contre, le signal Reset passe à l'état "1" pour commander l'unité de remise à zéro afin de suspendre momentanément le fonctionnement du microprocesseur. Pendant ce mode de réveil, les moyens de supervision ont pour tâche de contrôler le niveau de la tension d'alimentation. Tant que le niveau de tension n'est pas suffisant, le microprocesseur n'est pas en mesure de redémarrer.

A l'instant C, le niveau de tension d'alimentation est contrôlé suffisant, ce qui fait passer le signal Reset à l'état "0" pour permettre de remettre en fonction le microprocesseur. Au même instant C ou à l'instant D, le logiciel du microprocesseur peut commander le registre à verrouillage des moyens de supervision pour soit déconnecter lesdits moyens de supervision, soit les laisser en fonction pour le contrôle du niveau de la tension d'alimentation. Bien entendu, les moyens de supervision peuvent être enclenchés automatiquement par périodes temporelles déterminées à l'aide d'une programmation effectuée dans le microcontrôleur pour surveiller la tension d'alimentation.

A partir de la description qui vient d'être faite, de multiples variantes de réalisation du procédé de contrôle de la remise en fonction d'un circuit à microcontrôleur après un mode de repos, ainsi que du circuit à microcontrôleur peuvent être conçues par l'homme du métier sans sortir du cadre de l'invention définie par les revendications. Les moyens de supervision peuvent comprendre deux comparateurs et deux diviseurs résistifs de manière à pouvoir contrôler que la tension d'alimentation se trouve entre un seuil bas de référence et un seuil haut de référence.

## Revendications

1. Procédé de contrôle d'une remise en fonction d'un circuit à microcontrôleur (1) après un mode de repos, le circuit comprenant notamment un microcontrôleur (2) et des moyens de supervision (3) du niveau de la tension d'alimentation du circuit à microcontrôleur, **caractérisé en ce que** le procédé comprend une série d'étapes consistant à :
- fournir une instruction (RSleep) dans le circuit à microcontrôleur pour le passage du mode de repos à un mode de fonctionnement normal, ladite instruction enclenchant directement et de manière automatique les moyens de supervision (3) qui commandent le maintien dans un état de repos de plusieurs parties du microcontrôleur (2),
- comparer dans les moyens de supervision le niveau de la tension d'alimentation par rapport à un seuil de référence de la tension d'alimentation,
- remettre en fonction le microcontrôleur dès que le niveau de tension d'alimentation comparé dans les moyens de supervision est supérieur au seuil de tension d'alimentation.

2. Procédé selon la revendication 1 pour lequel le microcontrôleur (2) comprend un oscillateur (7) susceptible de produire des signaux d'horloge (CLK) pour cadencer des opérations notamment traitées par un microprocesseur (6) dans un mode de fonctionnement normal, et une unité de mise à zéro (8) destinée à suspendre le fonctionnement du microprocesseur sous la commande des moyens de supervision (3), **caractérisé en ce que** l'oscillateur passe d'un état déconnecté sans fourniture de signaux d'horloge pendant le mode de repos à un état de remise en fonction à l'instant de la réception par les moyens de supervision de l'instruction de remise en fonction ou après ladite instruction.

3. Procédé selon l'une des revendications précédentes, **caractérisé en ce que** les moyens de supervision (3) en fonction fournissent un signal de commande (Reset) à l'unité de mise à zéro (8) dès la réception de l'instruction de remise en fonction (RSleep) pour que ladite unité de mise à zéro commande la suspension de fonctionnement du microprocesseur (6) pendant toute la durée de comparaison du niveau de la tension d'alimentation au seuil de référence de tension d'alimentation, jusqu'à ce que le niveau de la tension d'alimentation soit contrôlé supérieur audit seuil de référence.

4. Procédé selon la revendication 3, pour lequel les moyens de supervision comprennent un comparateur de tension (20) et un diviseur résistif constitué d'au moins deux résistances (R1, R2) connectées en série avec un transistor de type MOS (N_{S}) entre deux bornes (V_{DD}, V_{SS}) d'une source de tension continue d'alimentation (10), une borne de grille du transistor étant commandée par un signal de sortie (IN) d'un registre à verrouillage (22), qui est commandé par l'instruction de remise en fonction (RSleep) de manière à rendre conducteur ledit transistor pour la mise en fonction du diviseur résistif et du comparateur, le noeud de connexion des deux résistances étant relié à une première borne d'entrée du comparateur, alors qu'une seconde borne d'entrée du comparateur reçoit une tension de référence (Vref) fournie par une unité de référence de tension (5), **caractérisé en ce que** dès que le niveau de la tension au noeud de connexion des deux résistances, qui détermine le niveau de tension d'alimentation, est contrôlé supérieur à la tension de référence (Vref) par le comparateur des moyens de supervision, un signal de sortie (LowBat) du comparateur est relié à une entrée d'une bascule (21) des moyens de supervision, qui est cadencée par les signaux d'horloge (CLK) pour fournir un signal de commande (Reset) à l'unité de mise à zéro afin de remettre en fonction le microprocesseur (6) et placer le microcontrôleur dans un mode de fonctionnement normal.

5. Procédé selon l'une des revendications précédentes, **caractérisé en ce qu'**une instruction de déconnexion (Dbit, CPUw) des moyens de supervision (3) est fournie par le microcontrôleur après la remise en fonction du microcontrôleur.

6. Procédé selon l'une des revendications précédentes, **caractérisé en ce que** dans le mode de fonctionnement normal du circuit à microcontrôleur, les moyens de supervision sont enclenchés par périodes temporelles déterminées par le microcontrôleur de manière à contrôler le niveau de la tension d'alimentation.

7. Circuit à microcontrôleur (1) pour la mise en oeuvre du procédé de contrôle selon l'une des revendications précédentes, ledit circuit comprenant des moyens de supervision (3) du niveau de la tension d'alimentation du circuit à microcontrôleur, un microcontrôleur (2), qui comprend un microprocesseur (6), un oscillateur (7) pour fournir des signaux d'horloge (CLK) pour cadencer des opérations du microprocesseur, et une unité de mise à zéro (8) commandée par les moyens de supervision, **caractérisé en ce que** les moyens de supervision comprennent un comparateur de tension (20) et un diviseur résistif constitué d'au moins deux résistances (R1, R2) connectées en série avec un transistor de type MOS (N_{S}) entre deux bornes (V_{DD}, V_{SS}) d'une source de tension continue d'alimentation (10), le transistor étant rendu conducteur lors de la mise en fonction des moyens de supervision, et **en ce que** le noeud de connexion des deux résistances et une tension de référence (Vref) sont connectés respectivement à une première et une seconde bornes d'entrée du comparateur, le noeud de connexion des deux résistances déterminant le niveau de la tension d'alimentation, alors que la tension de référence déterminant le seuil de référence de la tension d'alimentation.

8. Circuit à microcontrôleur (1) selon la revendication 7, **caractérisé en ce qu'**une instruction de remise en fonction (RSleep) au terme d'un mode de repos du circuit à microcontrôleur (1) est fournie à un registre à verrouillage (22) des moyens de supervision pour enclencher directement les moyens de supervision en rendant conducteur le transistor MOS pour la mise en fonction du diviseur résistif et du comparateur, et **en ce qu'**une borne de sortie du comparateur est connectée à une borne d'entrée d'une bascule (21) des moyens de supervision, qui est cadencée par des signaux d'horloge (CLK) de l'oscillateur (7) de manière à fournir un signal de commande à l'unité de mise à zéro (8) pour suspendre le fonctionnement du microprocesseur si le niveau de la tension d'alimentation est en dessous du seuil de référence de tension d'alimentation.

9. Appareil électrique comprenant une ou plusieurs piles d'alimentation électrique, un dispositif motorisé et/ou un écran d'affichage, et un circuit à microcontrôleur (1) selon l'une des revendications 7 et 8 pour la commande du dispositif motorisé et/ou de l'écran d'affichage, et le contrôle du niveau de la tension d'alimentation lors du passage d'un mode de repos à un mode de fonctionnement normal de l'appareil électrique.

10. Appareil électrique selon la revendication 9, **caractérisé en ce qu'**il est un rasoir électrique, une brosse à dents électrique ou un téléphone portable.
